# EUROPÄISCHE PATENTSCHRIFT

(11) **EP 1 459 923 B1**
(45) Veröffentlichungstag und Bekanntmachung des Hinweises auf die Patenterteilung: **28.10.2009**
(21) Anmeldenummer: 04005183.1
(22) Anmeldetag: 04.03.2004
(51) Int. Cl.: B60J 10/00, B60J 1/00

(54) **Verbindung eines Fensters mit einem Wagenkasten, insbesondere eines Schienenfahrzeuges**
Connection between a window and a vehicle body, particularly a railway vehicle
Assemblage entre une fenêtre et une caisse de véhicule, notamment un véhicule ferroviaire

(30) Priorität: 21.03.2003 DE 10312741
(43) Veröffentlichungstag der Anmeldung: 22.09.2004
(73) Patentinhaber: SIEMENS AKTIENGESELLSCHAFT, 80333 München (DE)
(72) Erfinder: Altenburg, Klaus, Dr., 52146 Würselen (DE); Aretz, Walter, 41065 Mönchengladbach (DE); Beier, Andreas, 34130 Kassel (DE)

(56) Entgegenhaltungen:
- DE-A1- 2 009 239
- DE-A1- 3 410 742
- GB-A- 260 115
- GB-A- 2 253 659
- JP-A- 58 126 216
- US-A- 2 700 196
- US-A- 3 159 884

## Beschreibung

Die Erfindung betrifft eine Verbindung eines Fensters mit einem Wagenkasten, insbesondere eines Schienenfahrzeuges, wobei das Fenster wenigstens eine Glasscheibe aufweist und der Wagenkasten einen Fensterausschnitt enthält.

Fenster von Schienenfahrzeugen werden häufig im Fahrbetrieb oder durch Vandalismus beschädigt. Bei starker Beschädigung eines Fensters ist die Sicherheit der Fahrgäste nicht mehr gewährleistet. In diesem Fall ist das Fenster auszutauschen. Der Austausch eines Fensters erfordert in der Regel einen hohen Zeitaufwand, wobei das Fahrzeug in dieser Zeit nicht betriebsbereit ist. Somit kann ein Fenstertausch hohe Kosten verursachen. Ziel der Betreiber von Schienenfahrzeugen ist es deshalb, den Zeitaufwand für den Austausch eines Fensters zu reduzieren.

Bei modernen Schienenfahrzeugen ist es üblich, die Fenster allein durch Kleben oder durch Schrauben und Kleben mit der Rohbaustruktur des Wagenkastens zu verbinden. Solche Verbindungen müssen beim Austausch eines Fensters durch zeitaufwändige Arbeitschritte neu hergestellt werden. Außerdem ist die derzeitige Praxis beim Kleben von Fenstern kein reproduzierbarer Prozess, weil beispielsweise bei der Güte der Klebeflächenvorbereitung, der Menge des aufgetragenen Klebstoffs und bei den klimatischen Bedingungen während der Aushärtung des Klebstoffs (Temperatur, Luftfeuchtigkeit) Schwankungen auftreten können.

Der Erfindung liegt daher die Aufgabe zugrunde, die Verbindung eines Fensters mit einem Wagenkasten so zu gestalten, dass ein Einbau bzw. ein Ausbau des Fensters in einfacher, reproduzierbarer Weise und innerhalb kurzer Zeit möglich ist.

Diese Aufgabe wird erfindungsgemäß dadurch gelöst, dass an der Glasscheibe rundum ein Hohlprofil befestigt ist, dessen Gestalt durch Einfüllen eines Mediums nach außen hin derart vergrößert wird, dass ein Abschnitt des Hohlprofils in eine am Fensterausschnitt umlaufende Bettung kraftübertragend eingreift.

Vorteilhafte Ausgestaltungen der Erfindung sind in den Unteransprüchen angegeben.

Die mit dem Gegenstand nach der Erfindung erzielbaren Vorteile sind insbesondere:
- Zeiteinsparung beim Einbau von Fenstern, speziell im Vergleich zum Einbau durch Kleben,
- reproduzierbarer Einbau-Prozess; die Prozessparameter wie z. B. der Fülldruck, die eingebrachte Menge an Füllmedium und die Aushärtungszeit können exakt gesteuert werden,
- vereinfachter Prozess, verbunden mit einem geringeren Schulungsaufwand beim Wartungspersonal,
- Einbau von Fenstern an beliebigen Orten und bei jeder Witterung möglich, sogar auf offener Strecke, verbunden mit höherer Verfügbarkeit der Fahrzeuge und Zeiteinsparung, da keine Rückführung von Fahrzeugen in Ausbesserungswerke erforderlich ist.

Im weiteren wird die Erfindung anhand von zwei Ausführungsbeispielen näher beschrieben, die in der Zeichnung prinzipartig dargestellt sind. Es zeigen
- Fig. 1: als erstes Ausführungsbeispiel einen Teilbereich eines Fahrzeugfensters und eines Wagenkastens im Querschnitt, in nicht montiertem Zustand,
- Fig. 2: das Beispiel nach Fig. 1 in montiertem Zustand,
- Fig. 3: als zweites Ausführungsbeispiel einen Teilbereich eines Fahrzeugfensters und eines Wagenkastens im Querschnitt, in montiertem Zustand,
- Fig. 4: das in Fig. 1 enthaltene, jedoch nicht befüllte Kunststoffprofil.

Wie ersichtlich, hat das Fenster zwei Scheiben 1 aus vorzugsweise Verbundsicherheitsglas und einen dazwischen angeordneten Abstandhalter 8, der von den Scheibenrändern überragt wird. Die Glasscheiben 1 sind durch ein Hohlprofil 3 rahmenförmig umschlossen. Ein Schenkel 3b des Hohlprofils 3 ist entlang des gesamten Fensterumfangs in die vom Abstandhalter 8 gebildete Nut zwischen den beiden Scheiben 1 eingeschoben. Zusätzlich kann das Hohlprofil 3 durch Kleben an den Scheiben 1 fixiert sein. Das Hohlprofil 3 besteht aus einem elastischen Kunststoff. Die hier nicht dargestellten Enden des Hohlprofils 3 stoßen stumpf zusammen und sind dicht miteinander verbunden, je nach Material beispielsweise durch Kleben, Vulkanisieren oder Schweißen.

Das Hohlprofil 3 enthält eine Kammer 3c, die - ähnlich wie ein Fahrradschlauch - über ein Ventil 6 mit einem Medium 4 befüllt werden kann. Als Medium 4 eignen sich prinzipiell alle Gase und Flüssigkeiten, bevorzugt wird jedoch ein selbstaushärtender Kunststoff verwendet, z. B. ein Elastomer mit niedriger Shore-Härte. Durch das Befüllen vergrößert sich die Gestalt des Hohlprofils 3 nach außen hin bis letztlich ein Abschnitt 3a in eine am Fensterausschnitt 2 des Wagenkastens umlaufende Bettung 5 kraftübertragend eingreift. Für die gewollte feste Halterung des Fensters ist im übrigen die Bettung 5 in ihrem Querschnitt so ausgebildet, dass über die Kontur ein formschlüssiges Zusammenwirken mit dem Abschnitt 3a des Hohlprofils 3 besteht. Die Montage des Fensters ist nach dem Aushärten des eingefüllten Mediums 4 abgeschlossen. Ein Ausbau des Fensters ist durch Zerschneiden des Hohlprofils 3 leicht möglich.

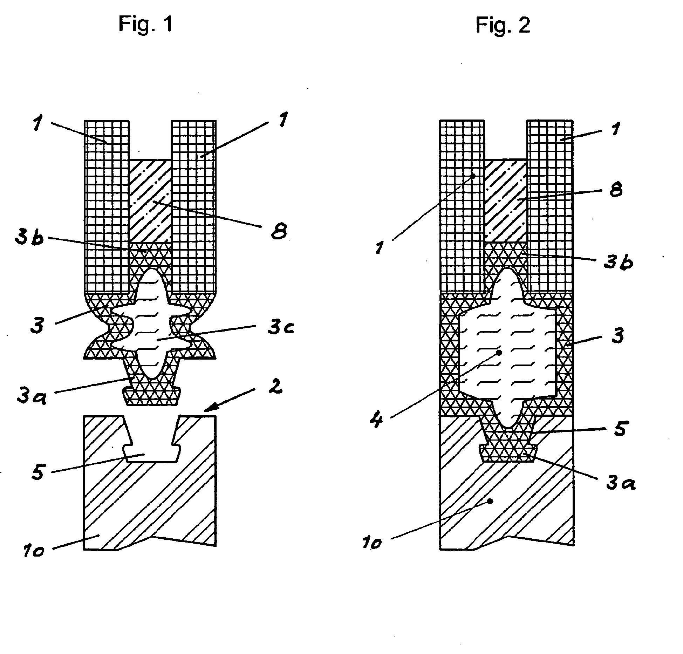

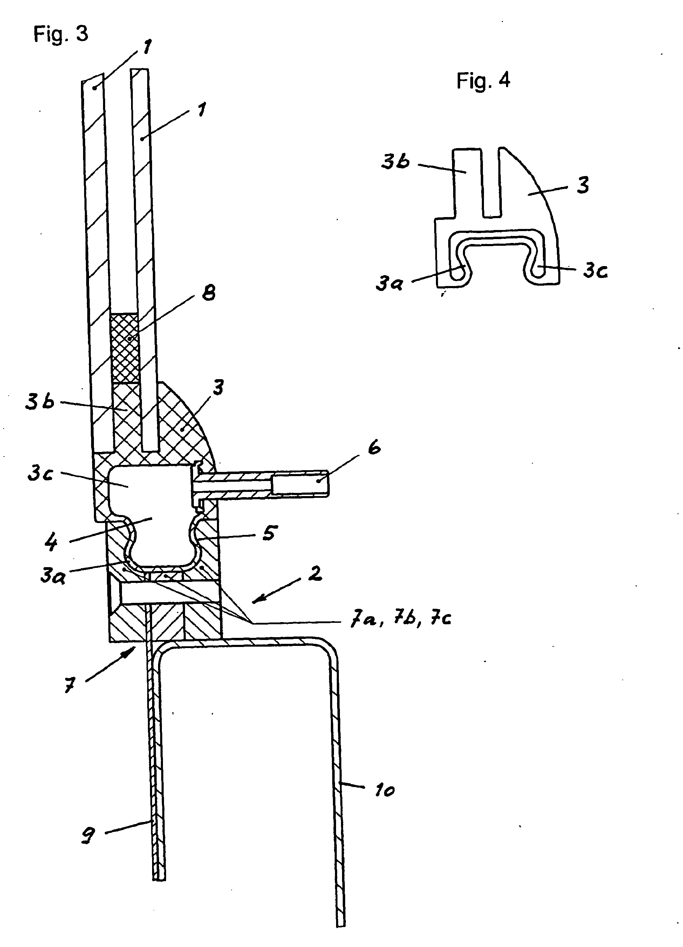

Nach dem Ausführungsbeispiel der Fig. 1 und 2 kann die Bettung 5 in Fahrzeugträgern 10 integriert sein, die den Fensterausschnitt 2 des Wagenkastens umgeben. Alternativ sind gemäß Fig. 3 im Bereich des Fensterausschnitts 2 gesonderte Profile 7 vorgesehen, welche die Bettung 5 enthalten. Jedes dieser Profile 7 kann der Einfachheit halber aus drei Elementen 7a, 7b und 7c bestehen, die durch Schrauben oder Niete vereinigt und zugleich an einem Halteblech 9 des Wagenkastens verankert sind. Die beiden äußeren Elemente 7a und 7c sind identisch ausgebildet.

Mit Hilfe des befüllbaren Hohlprofils 3 kann natürlich auch ein Fenster mit nur einer Glasscheibe 1 eingebaut werden. Eine entsprechende Anordnung ergibt sich beispielsweise aus Fig. 3 durch Weglassen der in Zeichnungsebene linken Glasscheibe 1 und des Abstandhalters 8.

## Patentansprüche

1. Verbindung eines Fensters mit einem Wagenkasten, insbesondere eines Schienenfahrzeuges, wobei das Fenster wenigstens eine Glasscheibe (1) aufweist und der Wagenkasten einen Fensterausschnitt (2) enthält, **dadurch gekennzeichnet, dass** an der Glasscheibe (1) rundum ein Hohlprofil (3) befestigt ist, dessen Gestalt durch Einfüllen eines Mediums (4) nach außen hin derart vergrößert wird, dass ein Abschnitt (3a) des Hohlprofils (3) in eine am Fensterausschnitt (2) umlaufende Bettung (5) kraftübertragend eingreift.

2. Verbindung nach Anspruch 1, **dadurch gekennzeichnet, dass** das Hohlprofil (3) aus einem elastischem Kunststoff besteht.

3. Verbindung nach Anspruch 1 oder 2, **dadurch gekennzeichnet, dass** als einfüllbares Medium (4) ein selbstaushärtender Kunststoff vorgesehen ist.

4. Verbindung nach einem der Ansprüche 1 bis 3, **dadurch gekennzeichnet, dass** das Hohlprofil (3) ein Füllventil (6) aufweist.

5. Verbindung nach einem der Ansprüche 1 bis 4, **dadurch gekennzeichnet, dass** im Bereich des Fensterausschnitts (2) die Bettung (5) enthaltende Profile (7) vorgesehen sind.

6. Verbindung nach einem der Ansprüche 1 bis 5, **dadurch gekennzeichnet, dass** die Bettung (5) in ihrem Querschnitt so ausgebildet ist, dass ein formschlüssiges Zusammenwirken mit dem Abschnitt (3a) des Hohlprofils (3) besteht.

## Claims

1. Connection between a window and a carriage body, in particular of a rail vehicle, wherein the window has at least one glass pane (1) and the carriage body contains a window cutout (2), **characterized in that** a hollow profile (3) is fastened to the glass pane (1) all around, the shape of which profile is enlarged towards the outside by pouring in a medium (4) in such a way that a portion (3a) of the hollow profile (3) engages in a force-transmitting manner into a bed (5) which extends peripherally along the window cutout (2).

2. Connection according to Claim 1**, characterized in that** the hollow profile (3) is made of a flexible plastic.

3. Connection according to Claim 1 or 2, **characterized in that** a self-curing polymer is provided as the pourable medium (4).

4. Connection according to one of Claims 1 to 3,
**characterized in that** the hollow profile (3) has a filling valve (6).

5. Connection according to one of Claims 1 to 4,
**characterized in that** profiles (7) which contain the bed (5) are provided in the region of the window cutout (2).

6. Connection according to one of Claims 1 to 5,
**characterized in that** the bed (5) is designed in its cross section such that there is a positive interaction with the portion (3a) of the hollow profile (3).

## Revendications

1. Assemblage d'une fenêtre à une caisse de wagon, notamment de véhicules ferroviaires, dans lequel la fenêtre a au moins une vitre ( 1 ) en verre et la caisse de wagon comporte une mortaise ( 2 ) de fenêtre, **caractérisé en ce que** sur la vitre ( 1 ) en verre est fixé tout autour un profilé ( 3 ) creux, dont la conformation est, par remplissage par un milieu ( 4 ), agrandie vers l'extérieur de façon à ce qu'une partie ( 3a ) du profilé ( 3 ) creux pénètre avec transmission de force, dans un lit ( 5 ) faisant le tour de la mortaise ( 2 ) de fenêtre.

2. Assemblage suivant la revendication 1, **caractérisé en ce que** le profilé ( 3 ) est en une matière plastique élastique.

3. Assemblage suivant la revendication 1 ou 2,
**caractérisé en ce qu'**il est prévu comme milieu ( 4 ) de remplissage une matière plastique autodurcissable.

4. Assemblage suivant l'une des revendications 1 à 3, **caractérisé en ce que** le profilé ( 3 ) creux a une soupape ( 6 ) de remplissage.

5. Assemblage suivant l'une des revendications 1 à 4, **caractérisé en ce qu'**il est prévu des profilés ( 7 ) contenant le lit ( 5 ) dans la partie de la mortaise ( 2 ) de fenêtre.

6. Assemblage suivant l'une des revendications 1 à 5, **caractérisé en ce que** la section transversale du lit ( 5 ) est telle qu'il y a une coopération par complémentarité de forme avec la partie ( 3a ) du profilé ( 3 ) creux.
